# EUROPEAN PATENT SPECIFICATION

(11) **EP 4 572 301 B1**
(45) Date of publication and mention of the grant of the patent: **26.08.2026**
(21) Application number: 24219172.4
(22) Date of filing: 11.12.2024
(51) Int. Cl.: H04N 1/00, H04N 1/32

(54) **IMAGE READING APPARATUS THAT READS IMAGE OF DOCUMENT**
BILDLESEVORRICHTUNG, DIE EIN BILD EINES DOKUMENTS AUSLIEST
APPAREIL DE LECTURE D'IMAGE QUI LIT UNE IMAGE DE DOCUMENT

(30) Priority: 13.12.2023 JP 2023210648
(43) Date of publication of application: 18.06.2025
(73) Proprietor: Kyocera Document Solutions Inc., Osaka-shi, Osaka 540-8585 (JP)
(72) Inventor: Inoue, Yasufumi, Osaka, 540-8585 (JP)
(74) Representative: BRP Renaud & Partner mbB Rechtsanwälte Patentanwälte Steuerberater

(56) References cited:
- JP-A- 2010 160 611
- US-A1- 2004 066 526
- US-A1- 2022 038 593

## Description

### BACKGROUND

The present invention relates to an image reading apparatus that reads an image of a document.

An image forming apparatus, configured to also act as an image reading apparatus, reads the image of a document, and forms the image of the document on a recording sheet. When the document is dog-eared, the corresponding corner of the document image that has been read is missing, and therefore the document image formed on the recording sheet also has a missing corner.

Here, an image reading apparatus is know that includes a photodetector that receives light reflected by the document, and a first light emitting device and a second light emitting device, located upstream and downstream of the photodetector respectively, in the document reading direction. With such an image reading apparatus, the document image (first image) is read with the first light emitting device turned on, another document image (second image) is read with the second light emitting device turned on, and still another image (third image) is read, with the first light emitting device and the second light emitting device both turned on. An image processing device compares between the first image and the second image, thereby identifying a folding line at the center of the document, and corrects the density of the pixels in the range affected by the folding line, on the basis of the third image.

In addition, another image reading apparatus is known that includes a sticky note information extracting device that extracts sticky note information related to a sticky note, from a document image with sticky note, and an image processing device that generates, on the basis of the sticky note information, a document image without sticky note by excluding the sticky note from the document image with sticky note, and also a sticky note information image including the sticky note information related to the document image without sticky note. Such image reading apparatus outputs the document with sticky note as a document image without sticky note, and also outputs, separately, the sticky note information image for the purpose of confirmation. Further prior art is known from JP 2010 160611 A, US 2022/038593 A1 and US 2004/066526 A1.

### SUMMARY

The invention proposes further improvement of the foregoing technique.

In an aspect, the invention provides an image reading apparatus including an image reading device, a controller, a sheet defect decider, a written information defect decider, and a decision device. The image reading device reads an image of a document. The controller causes the image reading device to sequentially read a plurality of documents one by one. The sheet defect decider decides whether the document that has been read has a defect in sheet shape, on a basis of a document image acquired through a reading operation by the image reading device. The written information defect decider decides whether information written on the document that has been read has a defect, on a basis of the document image acquired through the reading operation by the image reading device. The decision device decides that the document has a defect, when the sheet defect decider decides that the document has a defect in sheet shape, and the written information defect decider also decides that the information written on the document has a defect.

### BRIEF DESCRIPTION OF THE DRAWINGS

Fig. 1 is a cross-sectional view showing an image forming apparatus that employs a document reading method according to an embodiment of the invention;
Fig. 2 is a block diagram showing an essential internal configuration of the image forming apparatus;
Fig. 3A is a flowchart showing a process for deciding whether a document M has a defect, with an image reading device 11 on the basis of the document image;
Fig. 3B is a flowchart showing a control process that follows Fig. 3A;
Fig. 3C is a flowchart showing another control process that follows Fig. 3A;
Fig. 4 is a schematic drawing showing a setting screen of a defect detection mode, displayed on a display device of the image forming apparatus;
Fig. 5A is a schematic drawing showing an image of a document, the sheet shape of which is not defective;
Fig. 5B and Fig. 5C are schematic drawings respectively showing document images, different from each other in extent of dog-ear;
Fig. 6A is a schematic drawing showing an image of a document, the sheet shape of which is not defective;
Fig. 6B and Fig. 6C are schematic drawings respectively showing document images, partially torn away to different extents;
Fig. 7A and Fig. 7B are schematic drawings showing an image of a document, the sheet shape of which is not defective;
Fig. 7C, and Fig. 7D are schematic drawings respectively showing document images, different in extent of defect of written information, due to dog-ear;
Fig. 8A is a schematic drawing showing an image of a document, the sheet shape of which is not defective;
Fig. 8B and Fig. 8C are schematic drawings respectively showing document images, different in extent of defect of written information, due to presence of a sticky note;
Fig. 9 is a schematic drawing showing a warning screen, displayed on the display device of the image forming apparatus;
Fig. 10 is a schematic drawing showing a defect decision suspension screen, displayed on the display device of the image forming apparatus; and
Fig. 11 is a schematic drawing showing another warning screen, displayed on the display device of the image forming apparatus.

### DETAILED DESCRIPTION

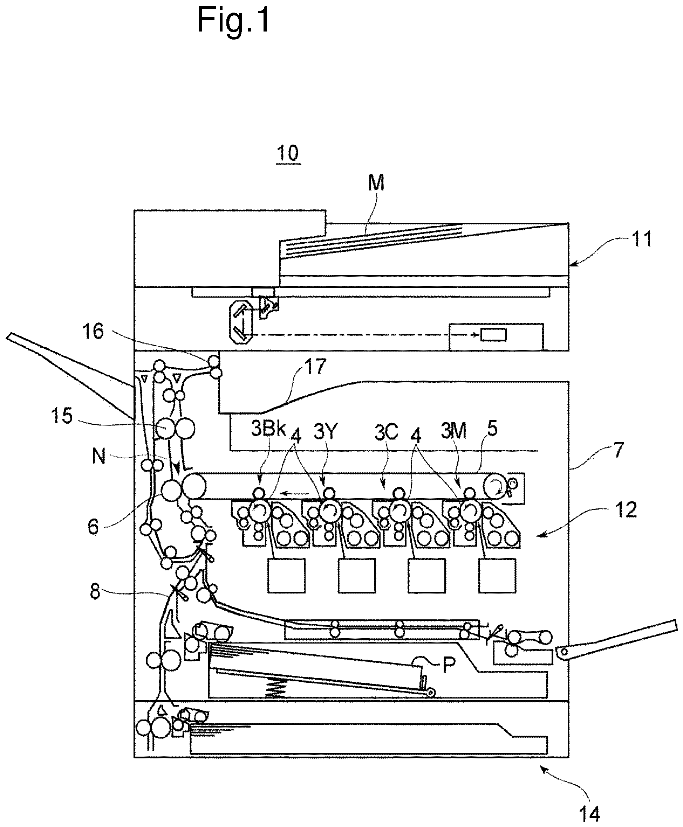

Hereafter, an embodiment of the invention will be described, with reference to the drawings. Fig. 1 is a cross-sectional view showing an image forming apparatus that employs a document reading method according to an embodiment of the invention. As shown in Fig. 1, the image forming apparatus 10 according to the embodiment is a multifunction peripheral (MFP) having a plurality of functions, such as copying and scanning. The image forming apparatus 10 includes an image reading device 11 and an image forming device 12.

The image reading device 11 includes an image sensor, such as a CCD sensor or a contact image sensor (CIS), for optically reading the image of a document M. The image data representing the image of the document M is generated from the analog output of the image sensor. The image reading device 11 is also configured to read the image of the document M placed on a document table (platen glass) with the image sensor, or sequentially read the images of a plurality of documents M, set on a document tray to be picked up one by one and transported by an automatic document feeder (ADF).

The image forming device 12 serves to form the image of the document M represented by the image data, on a recording sheet, and includes an image forming unit 3M for magenta, an image forming unit 3C for cyan, an image forming unit 3Y for yellow, and an image forming unit 3Bk for black. In each of the image forming units 3M, 3C, 3Y, and 3Bk, the surface of a photoconductor drum 4 is uniformly charged and exposed, to thereby form an electrostatic latent image on the surface of the photoconductor drum 4, and then the electrostatic latent image on the surface of the photoconductor drum 4 is developed into a toner image, which is transferred to an intermediate transfer belt 5. As result, a colored toner image is formed on the intermediate transfer belt 5. The colored toner image is transferred, as secondary transfer, to the recording sheet P transported from a sheet feeding device 14 along a transport route 8, at a nip region N between the intermediate transfer belt 5 and a secondary transfer roller 6.

Thereafter, a fixing device 15 heats and presses the recording sheet P, to fix the toner image onto the recording sheet P, by thermal compression, and then the recording sheet P is delivered to an output tray 17, via a delivery roller 16.

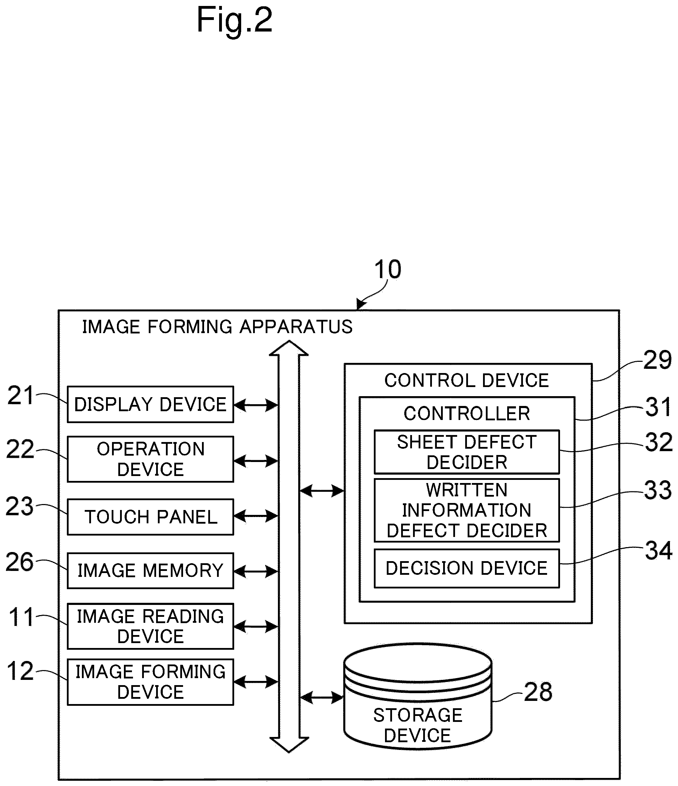

Fig. 2 is a block diagram showing an essential internal configuration of the image forming apparatus 10 according to the embodiment. As shown in Fig. 2, the image forming apparatus 10 according to the embodiment includes the image reading device 11, the image forming device 12, a display device 21, an operation device 22, a touch panel 23, an image memory 26, a storage device 28, and a control device 29. The cited components are configured to transmit and receive data and signals to and from each other, via a bus.

The display device 21 includes, for example, a Liquid Crystal Display (LCD) or an organic Light-Emitting Diode (OLED). The operation device 22 includes physical keys such as a numeric keypad, an enter key, and a start key.

The touch panel 23 is overlaid on the screen of the display device 22. The touch panel 23 is based on what is known as a resistive film or electrostatic capacitance, and detects a contact (touch) of the user's finger made thereon, along with the touched position, and outputs a detection signal indicating the coordinate of the touched position, to the control device 29 acting as a controller 31, as will be subsequently described.

In the image memory 26, the document image representing the document M, read by the image reading device 11, is stored.

The storage device 26 is a large-capacity storage device such as a solid-state drive (SSD) or a hard disk drive (HDD), and contains various application programs and various types of data.

The control device 29 includes a processor, a random-access memory (RAM), a read-only memory (ROM), and so forth. The processor is, for example, a central processing unit (CPU), an application specific integrated circuit (ASIC), or a micro processing unit (MPU). The control device 29 serves as the controller 31, a sheet defect decider 32, a written information defect decider 33, and a decision device 34, when the processor executes a control program stored in the ROM or the storage device 28.

The controller 31 executes overall control of the image forming apparatus 10. The controller 31 is connected to the image reading device 11, the image forming device 12, the display device 21, the operation device 22, the touch panel 23, the image memory 26, and the storage device 28. The controller 31 controls the operation of the components cited above, and transmits and receives signals and data to and from those components.

The controller 31 acts as a processing device that executes various processings necessary for the image forming job by the image forming apparatus 10. In addition, the controller 31 accepts instructions to execute an operation, inputted by the user, on the basis of a detection signal outputted from the touch panel 23, or an operation performed on the physical key of the operation device 22. For example, the controller 31 accepts a user's touch operation made through the touch panel 23, on a graphical user interface (GUI) displayed on the screen of the display device 21. The controller 31 is also configured to control the displaying operation of the display device 21.

The sheet defect decider 32 decides whether the document M has a defect in sheet shape, on the basis of the document image acquired through the reading operation of the document M, performed by the image reading device 11. The written information defect decider 33 decides whether the information written on the document M has a defect, on the basis of the image data. The decision device 34 decides that the document M has a defect, when the sheet defect decider 32 decides that the document M has a defect in sheet shape, and the written information defect decider 33 also decides that the information written on the document M has a defect.

With the image forming apparatus 10 configured as above, for example a user sets a plurality of documents M on the image reading device 11, and presses the start key on the operation device 22, so that a document reading instruction is inputted through the operation device 22. The controller 31 causes the image reading device 11, according to the document reading instruction, to sequentially read the images of the respective documents M, and store the images of the documents M in the image memory 26. Further, the controller 31 causes the image forming device 12 to form each of the images of the documents M on the recording sheet.

The controller 31 causes the image forming apparatus 10 to operate in a defect detection mode, in which a defect of the document M is detected, each time the image reading device 11 sequentially reads the image of the document M. In the case of the defect detection mode, the sheet defect decider 32 decides whether the document M has a defect in sheet shape, and the written information defect decider 33 decides whether the information written on the document M has a defect, each time the image reading device 11 sequentially reads the image of the document M. When the document M is decided to have a defect in sheet shape, and the information written on the document M is also decided to have a defect, the decision device 34 decides that the document M has a defect. In this case, the controller 31 may cause the image reading device 11 to suspend the reading operation of the document M, at the time that the decision device 34 has decided that the document M has a defect, and cause the display device 21 to display a warning message. Alternatively, the controller 31 may allow the image reading device 11 to continue with the reading operation of the document M, despite the decision device 34 having decided that the document M has a defect, and cause the display device 21 to display a warning message, after the image reading device 11 finishes the reading operation of all the documents M.

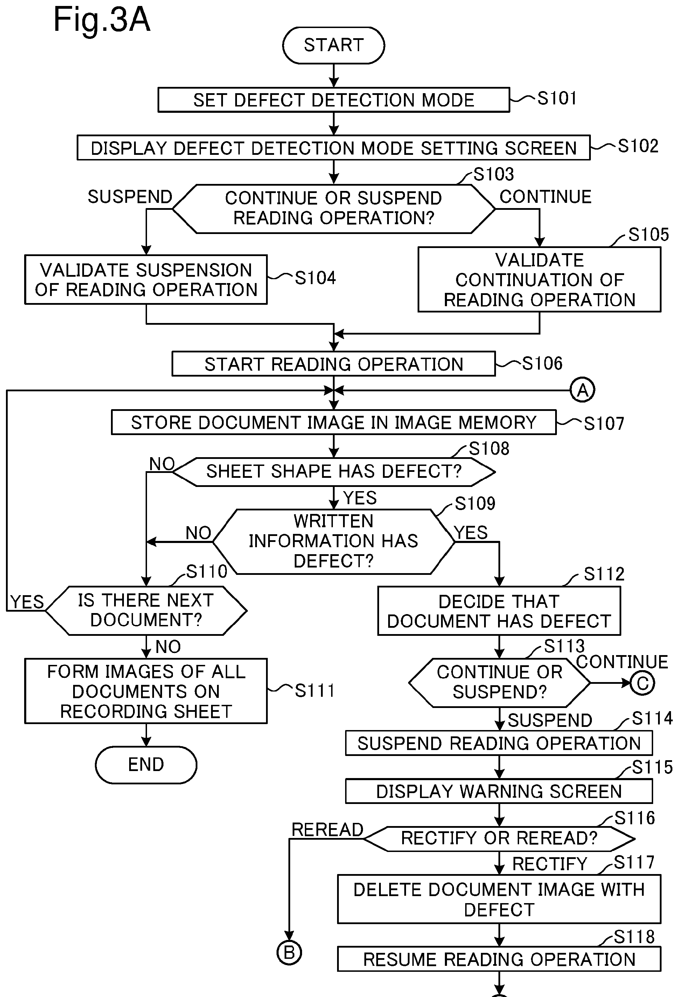

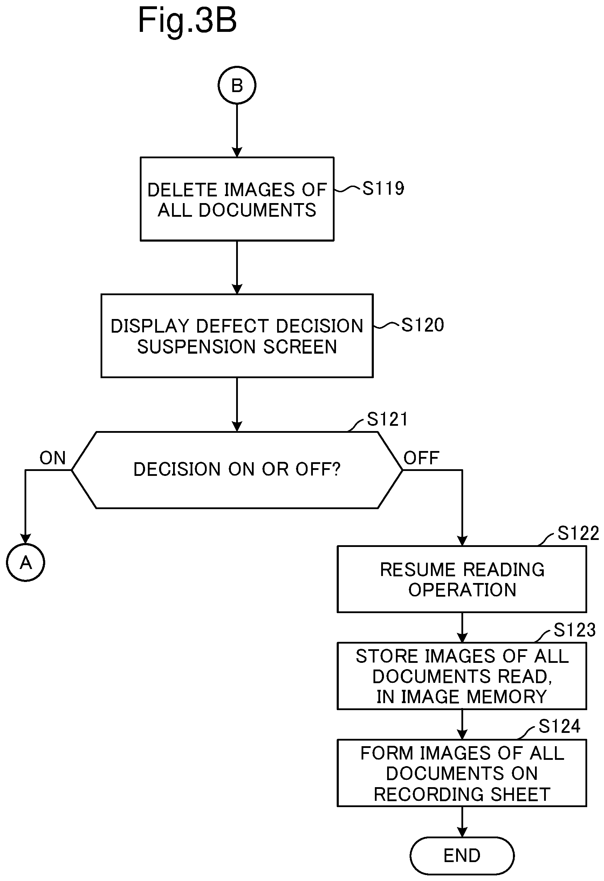

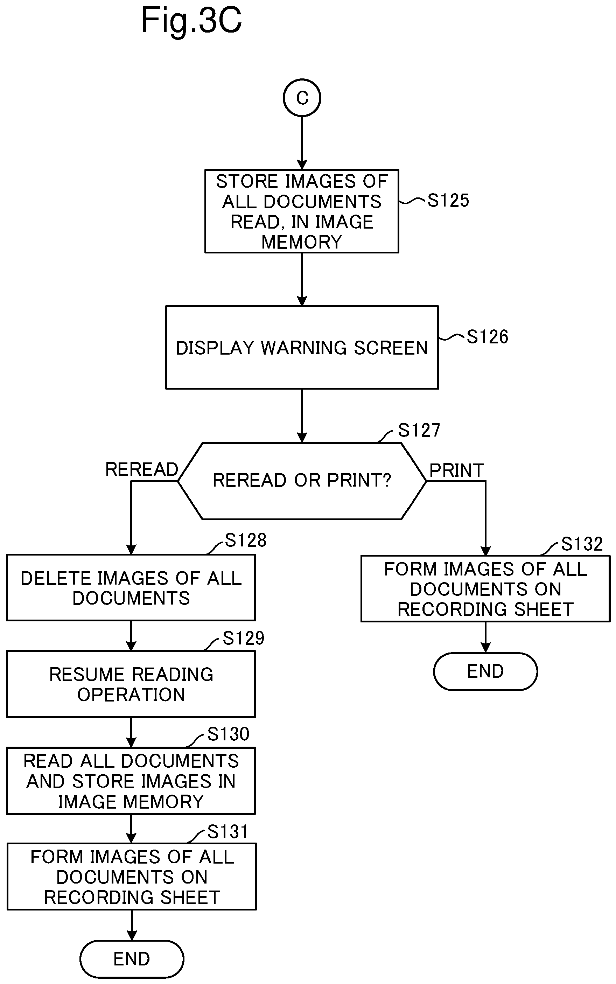

Referring now to flowcharts shown in Fig. 3A, Fig. 3B, and Fig. 3C, a process of deciding whether the document M has a defect, on the basis of the image of the document M read by the image reading device 11, will be described hereunder.

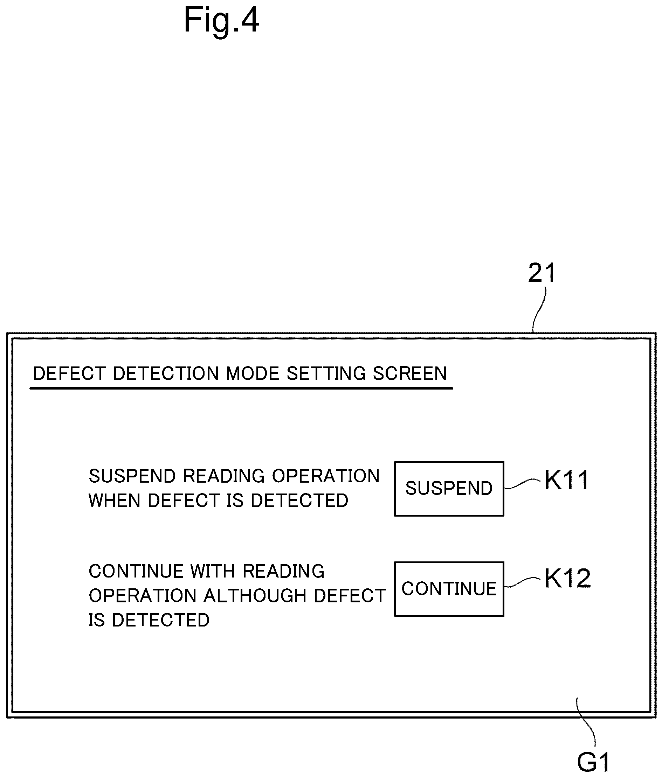

The user inputs an instruction to set the defect detection mode, through the GUI (not shown) displayed on the display device 21. The operation device 22 accepts the setting instruction. Upon detecting the setting instruction of the defect detection mode through the touch panel 23, the controller 31 sets the operation mode of the image forming apparatus 10 to the defect detection mode (S101). Then the controller 31 causes the display device 21 to display a setting screen G1 of the defect detection mode, as shown in Fig. 4 (S102).

The setting screen G1 of the defect detection mode includes a key K11, for inputting a suspension instruction due to defect, to select the suspension of the reading operation by the image reading device 11, at the time that a defect has been detected in the document M read by the image reading device 11, and a key K12 for inputting a reading instruction regardless of defect, to continue with the reading operation by the image reading device 11, instead of causing the image reading device 11 to suspend the reading operation, despite a defect of the document M having been detected, and to read all the documents M set on the image reading device 11.

Here, it will be assumed that the user has touched one of the keys K11 and K12 in the setting screen G1 of the defect detection mode, set a plurality of documents M on the image reading device 11, and touched the start key of the operation device 22.

When the suspension instruction due to defect is accepted by the operation device 22, because of the key K11 having been touched by the user, and a copying instruction is inputted to the operation device 22 through the start key ("Suspend" at S103), the controller 31 validates the suspension instruction due to defect (S104). In contrast, when the reading instruction regardless of defect is accepted by the operation device 22 because of the key K12 having been touched by the user, and the copying instruction is inputted to the operation device 22 through the start key ("Continue" at S103), the controller 31 validates the reading instruction regardless of defect (S105).

Then the controller 31 causes the image reading device 11 to read the documents M one by one, in response to the touch on the start key of the operation device 22 (S106), and stores the image of the document M in the image memory 26, each time the image of the document M is acquired through the reading operation by the image reading device 11 (S107).

The sheet defect decider 32 of the controller 31 decides whether the document M has a defect in sheet shape, each time the document M is read one by one, on the basis of the image of the document M stored in the image memory 26 (S108). To detect a defect of the sheet shape, for example, a method based on deep learning that employs a convolution neural network (CNN) may be adopted. The CNN is a type of a multilayer neural network, and includes a layer specialized in image processing, in the network. Various types of CNN have been developed depending on the purpose, such as a network that executes image classification for identifying the type of an image or an object in the image, thereby classifying the image into a plurality of classes, and a network that executes semantic segmentation for extracting a specific region from an image on a pixel-by-pixel basis. In this embodiment, a task of "extracting a defect in sheet shape from the document M that has been read" is interpreted as a task of "classifying the image of the document M that has been read into an image with a defect in sheet shape and an image without a defect in sheet shape", and a model (algorithm) for detecting and outputting a defect in sheet shape, through the deep learning based on the image classification network, is generated. The deep learning based on the CNN is executed by giving data groups called training data, to the network. The training data is composed of a pair including input image data and classification result data (right answer data).

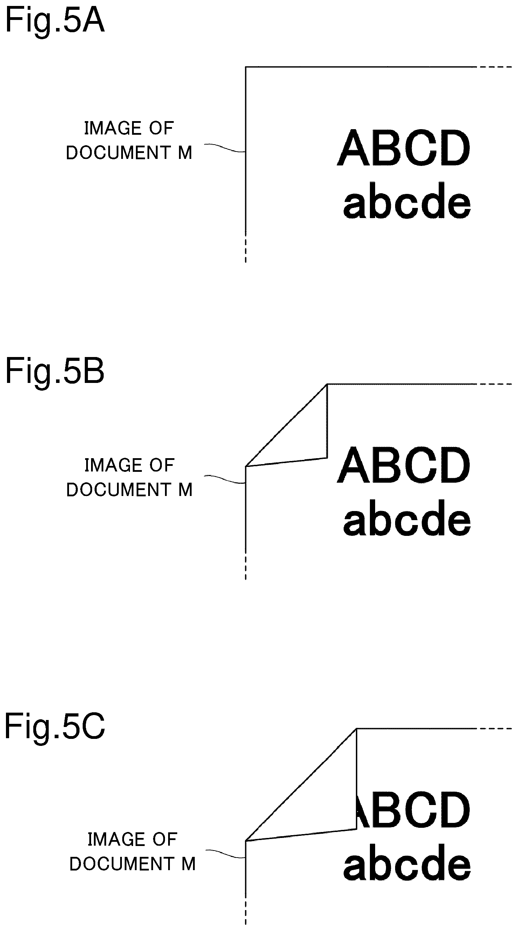

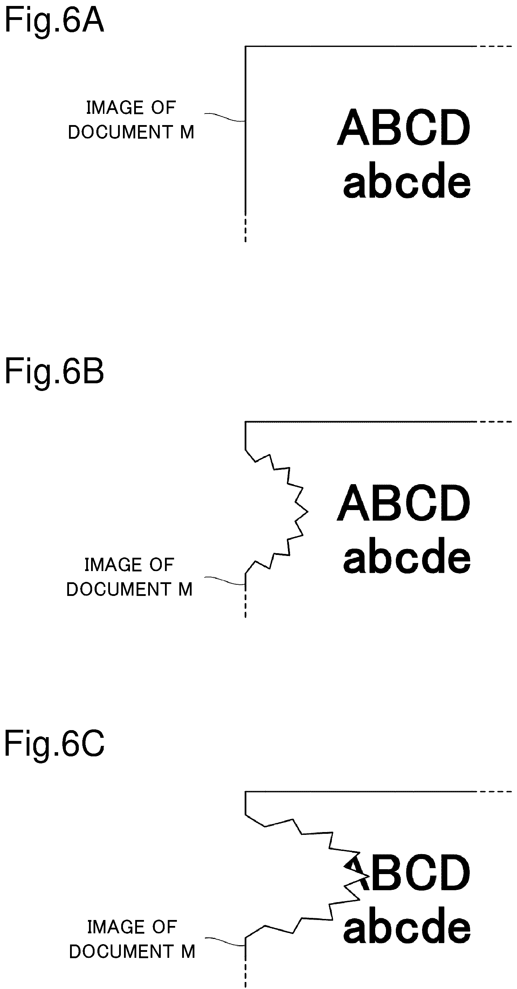

In this embodiment, the input image includes binary data, constituted of the image of the document M (0), in which the sheet shape has no defect, for example as shown in Fig. 5A, and the image of the document M (1), in which the sheet shape has a defect owing to a dog-ear, as shown in Figs. 5B and 5C. By causing the network to learn with a large amount of such training data, a classification model, for classifying (deciding) whether a given image of the document M has a defect in sheet shape, is generated. Then the defect in sheet shape of the document M that has been read, in other words the defect in sheet shape of the document M due to the dog-ear is identified, by utilizing the classification model. In addition, a state where a part of the sheet of the document M is torn away and missing may be identified as a defect, by causing the network to learn with the images of the document M that have no defect, as shown in Fig. 6A, and the images of the document M in which a part of the sheet is torn away and missing, as shown in Fig. 6B and 6C.

Alternatively, the sheet defect decider 32 of the controller 31 may detect the contour of the document M on the basis of the image of the document M stored in the image memory 26, and extract the four sides constituting the detected contour. In the case where a sloped side, inclined with respect to the four sides, is detected at a corner of the document image, the sheet defect decider 32 may extract such sloped side. Then, when the size of the sloped side is longer than a prespecified threshold, the sheet defect decider 32 may detect that the document M has a defect in sheet shape, in other words that the sheet of the document M is dog-eared.

Here, the user may be allowed to select one of the foregoing detection method, performed by the sheet defect decider 32, through the GUI. For example, the controller 31 may cause the display device 21 to display, in the setting screen G1 of the defect detection mode shown in Fig. 4, the keys respectively corresponding to the mentioned detection methods, so that a touch on one of those keys is detected through the touch panel 23, and the detection method associated with the detected key is adopted.

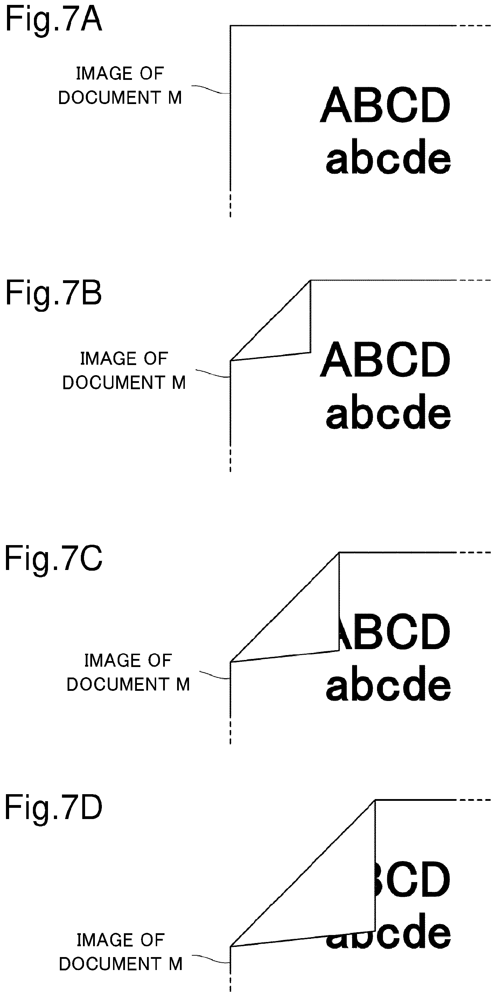

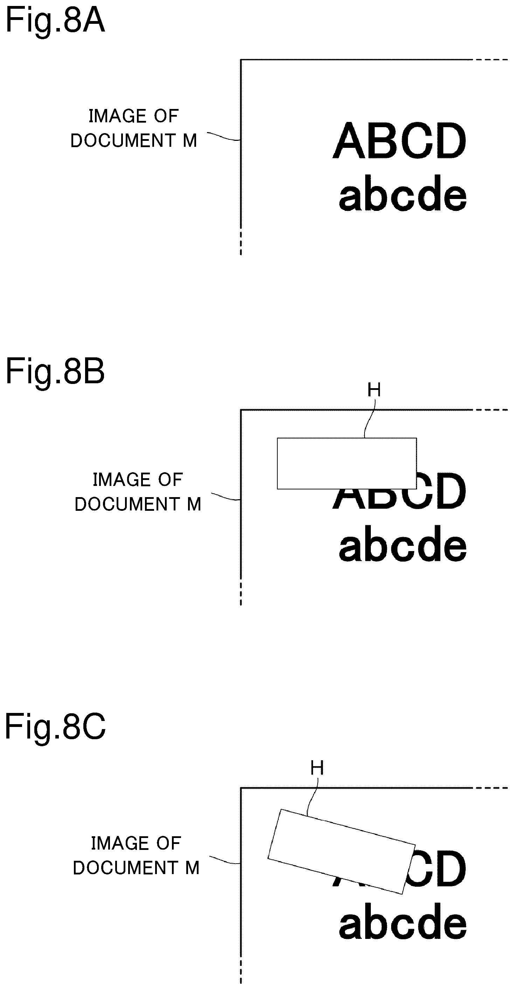

When the sheet defect decider 32 decides that the document M has a defect in sheet shape (Yes at S108), the written information defect decider 33 decides whether the information written on the document M has a defect, on the basis of the image of the document M stored in the image memory 26 (S109). In other words, the written information defect decider 33 decides whether the information written on the document M has a defect, in each case of "Yes" at S108, while the documents are being read one by one. To detect the defect in the information written on the document M also, the method based on the deep learning that employs the CNN may be adopted. In this case, a task of "extracting a defect in the written information from the image of the document M that has been read" is interpreted as a task of "classifying the image of the document M that has been read into an image with a defect in the written information and an image without a defect in the written information", and a model (algorithm) for detecting a defect in the written information, through the deep learning based on the image classification network, is generated and applied. In this embodiment, the input image includes binary data, constituted of the image of the document M (0), in which the written information such as a text has no defect, for example as shown in Fig. 7A, and the image of the document M (1), in which the written information has a defect owing to a dog-ear, as shown in Figs. 7B, 7C, and 7D. By causing the network to learn with a large amount of such training data, a classification model, for classifying (deciding) whether a given image of the document M has a defect in the written information, is generated. Then the defect in the information written on the document M that has been read, in other words the defect in the information written on the document M owing to the dog-ear is identified, by utilizing the classification model. In addition, a defect in the information written on the document M due to a sticky note H may be detected, by causing the network to learn with the images of the document M without a sticky note as shown in Fig. 8A, and the images of the document M with a sticky note, as shown in Fig. 8B and 8C.

Here, the user may be allowed to select one of the foregoing detection method, performed by the written information defect decider 33, through the GUI. For example, the controller 31 may cause the display device 21 to display, in the setting screen G1 of the defect detection mode shown in Fig. 4, the keys respectively corresponding to the mentioned detection methods, so that a touch on one of those keys is detected through the touch panel 23, and the detection method associated with the detected key is adopted.

When the written information defect decider 33 decides that the information written on the document M has no defect (No at S109), the controller 31 decides whether a next document M, not yet read, has been detected by a non-illustrated sensor of the image reading device 11 (S110). In other words, the controller 31 decides whether there is a next document M that has not been read yet. Upon deciding that there is a next document M (Yes at S110), the controller 31 repeats the operation of S107 to S110.

Here, also when the sheet defect decider 32 decides that the sheet shape of the document M has no defect (No at S108), the controller 31 decides whether there is a next document not read yet (S110), and repeats the operation of S107 to S110, upon deciding that there is a next document M (Yes at S110).

Upon deciding that there is no next document M (No at S110), the controller 31 causes the image forming device 12 to form each of the images of the documents M stored in the image memory 26, on the recording sheet (S111). Thereafter, the controller 31 finishes the operation.

In the case where the sheet defect decider 32 decides that the document M has a defect in sheet shape (Yes at S108), and the written information defect decider 33 also decides that the information written on the document M has a defect (Yes at S109), the decision device 34 decides that the document M has a defect (S112). When the decision device 34 decides that the document M has a defect, the controller 31 decides which of the suspension instruction due to defect (S104) and the reading instruction regardless of defect (S105) is set valid (S113).

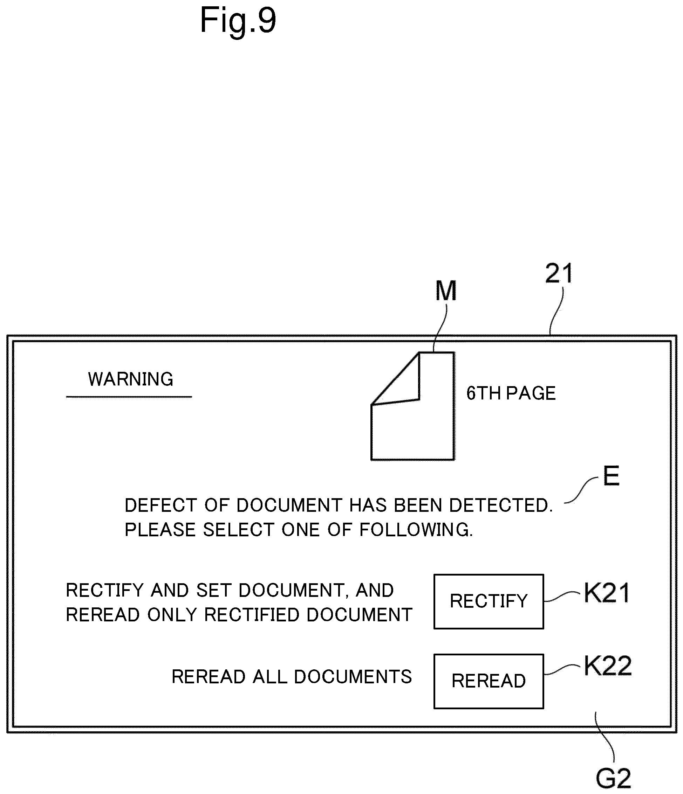

Upon deciding that the suspension instruction due to defect is set valid ("Suspend" at S113), the controller 31 immediately stops the operation of the image reading device 11 (S114), and causes the display device 21 to display a warning screen G2 as shown in Fig. 9 (S115).

The warning screen G2 shown in Fig. 9 includes an error message E to the effect that the document M has a defect, and the page number and the image of the document M with the defect. The warning screen G2 also includes a key K21 for selecting rectifying the defect of the document M, setting the rectified document M again on the image reading device 11, and reading all the remaining documents M including the document M that had the defect, and a key K22 for selecting rereading all the documents M.

For example, the user may rectify the defect of the document M, in view of the error message E and the image of the document M with the defect, set the rectified document M on the image reading device 11 again, and then touch the key K21. Upon detecting the rectification instruction associated with the key K21 through the operation device 22 ("Rectify" at S116), the controller 31 deletes the image of the document M with the defect, stored in the image memory 26 at S107 (S117). The controller 31 then causes the image reading device 11 to resume the reading operation (S118). Thereafter, the operation returns to S107, where the controller 31 causes the image reading device 11 to read the document M, the defect of which has now been rectified, and store the image of the rectified document M in the image memory 26 (S107). Thereafter, the controller 31 repeats the operation of S108 to S110.

Here, in the case where the controller 31 decides, after repeating the operation of S108 to S110, that there is no next document M (No at S110), the controller 31 causes the image forming device 12 to form each of the images of the documents M stored in the image memory 26, on the recording sheet (S111). Thereafter, the controller 31 finishes the operation.

In this case, the image of the document M with a defect is deleted from the image memory 26, each time a defect in the document M is detected, and the image of the document M, the defect of which has been rectified, is stored in the image memory 26. Therefore, the image of the document M without defect is formed on the recording sheet.

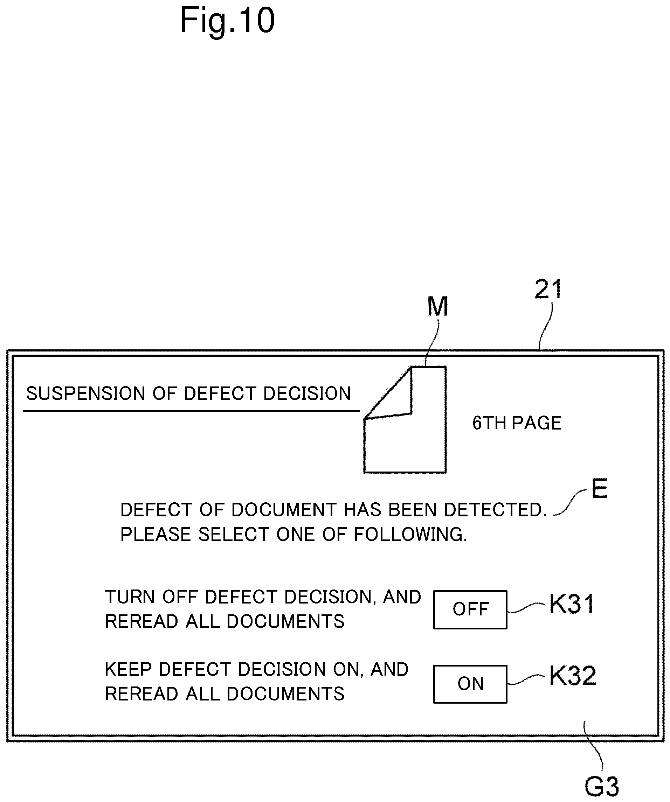

When the user touches the key K22 at S116, in view of the error message E and the image of the document M with the defect, the controller 31 receives a rereading instruction associated with the key K22 through the operation device 22 ("Reread" at S116). The controller 31 then deletes all the images of the documents M thus far read, from the image memory 26 (S119), and causes the display device 21 to display a defect decision suspension screen G3 as shown in Fig. 10 (S120).

The defect decision suspension screen G3 includes the error message E to the effect that the document M has a defect, and the page number and the image of the document M with the defect. The defect decision suspension screen G3 also includes a key K31 for inputting a defect decision turn-off instruction, to cancel the defect decision with respect to the sheet shape and the written information of the document M, and reread all the documents M, and a key K32 for inputting a defect decision continuing instruction, to continue with the defect decision with respect to the sheet shape and the written information of the document M, and reread all the documents M.

For example, the user may rectify the defect of the document M, in view of the error message E and the image of the document M with the defect, set all the documents M on the image reading device 11 again, and then touch the key K32. Upon detecting the defect decision continuing instruction associated with the key K32 through the operation device 22 ("ON" at S121), the controller 31 keeps the defect decision function turned on, with respect to the sheet shape and the written information of the document M. Thereafter, the operation returns to S107.

In this case, the images of the documents M thus far read are deleted from the image memory 26, and the image data representing the image of the document M in which the defect has been rectified, and the respective images of the remaining documents M, is stored in the image memory 26. Therefore, it can be expected that the images of the respective documents M without a defect are formed on the recording sheets.

Alternatively, the user may set all the documents M on the image reading device 11 again, in view of the error message E and the image of the document M with the defect, and touch the key K31. Upon detecting the defect decision turn-off instruction associated with the key K31 through the operation device 22 ("OFF" at S121), the controller 31 cancels the defect decision function with respect to the sheet shape and the written information of the document M, and causes the image reading device 11 to resume the reading operation (S122). The controller 31 then causes the image reading device 11 to read all the documents M and store the respective images of the documents M in the image memory 26 (S123), and causes the image forming device 12 to form each of the images of the documents M on the recording sheet (S124). Thereafter, the controller 31 finishes the operation.

In this case, all the documents M are read, irrespective of whether each of the documents M has a defect, and each of the images of all the documents M is formed on the recording sheet.

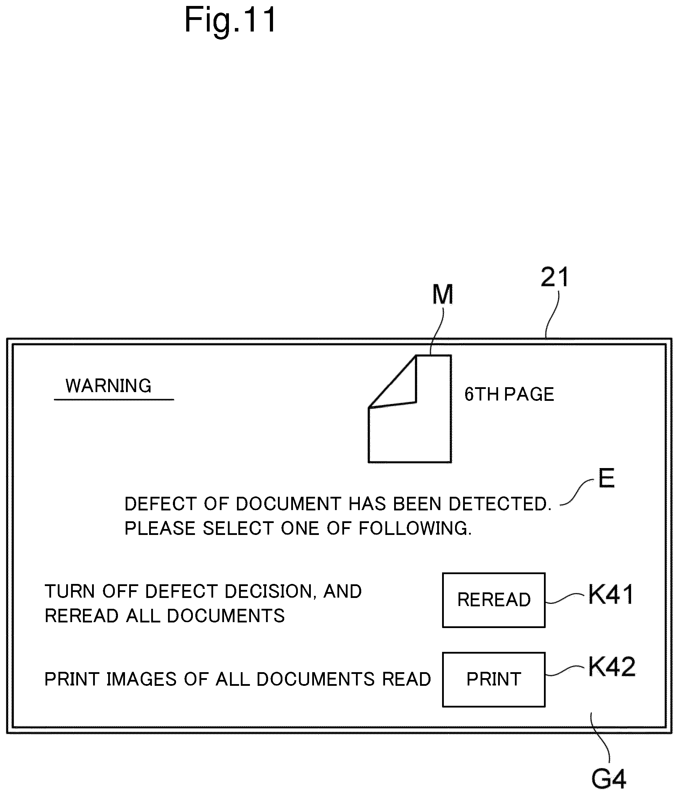

Here, upon deciding that the reading instruction regardless of defect is set valid ("Continue" at S113), the controller 31 causes the image reading device 11 to read all the remaining documents M following the document M in which the defect has been detected, and store the images of the respective documents M that have been read in the image memory 26 (S125). After the images of the documents M are stored in the image memory 26, the controller 31 causes the display device 21 to display a warning screen G4 as shown in Fig. 11 (S126).

The warning screen G4 includes the error message E to the effect that the document M has a defect, and the page number and the image of the document M with the defect. The warning screen G4 also includes a key K41 for inputting a document rereading instruction, to cancel the defect decision with respect to the sheet shape and the written information of the document M, and reread all the documents M, and a key K42 for inputting a printing instruction, to form each of the images of all the documents M stored in the image memory 26, on the recording sheet.

For example, the user may set all the documents M on the image reading device 11 again, in view of the error message E and the image of the document M with the defect, and touch the key K41. Upon detecting the document rereading instruction associated with the key K41 through the operation device 22 ("Reread" at S127), the controller 31 deletes all the images of the documents M stored in the image memory 26 (S128), and causes the image reading device 11 to resume the reading operation (S129), thereby causing the image reading device 11 to read all the documents M and store the images of the respective documents M in the image memory 26 (S130). Then the controller 31 causes the image forming device 12 to form each of the images of the documents M on the recording sheet (S131). Thereafter, the controller 31 finishes the operation.

In this case, all the documents M are read, irrespective of whether each of the documents M has a defect, and each of the images of all the documents M is formed on the recording sheet.

Alternatively, the user may touch the key K42, in view of the error message E and the image of the document M with the defect. Upon detecting the printing instruction associated with the key K42 through the operation device 22 ("Print" at S127), the controller 31 causes the image forming device 12 to form each of the images of the respective documents M stored in the image memory 26, on the recording sheet (S132). Thereafter, the controller 31 finishes the operation.

In this case, after the respective images of all the documents M have been read, each of the images of all the documents M are immediately formed on the recording sheet, irrespective of whether each of the documents M has a defect.

According to this embodiment, as described above, the document M is decided to have a defect, when the document M is decided to have a defect in sheet shape, and also in the information written on the document M. Accordingly, for example, in the case where the document image has a defect due to a dog-ear of the document M, but such dog-ear is not affecting the content of the information written on the document M, the document M is not decided to have a defect, and the image of the document M is validated, which facilitates the user to make an advantageous decision with respect to the defect of the document image. In other words, the user can be exempted from an unnecessary trouble of having the document M reread, because of the document M having been decided to have a defect, despite that the user can recognize the content of the document image without inconvenience.

According to the foregoing embodiment, the detection method of the sheet shape is exemplified by the deep learning based on the CNN. Instead, the sheet defect decider 32 may create different combinations of the input image data and the classification result data (right answer data), and generate a plurality of classification models, for classifying (deciding) the document M with defect in sheet shape and the document M without defect in sheet shape, according to criteria different from each other. In this case, the sheet defect decider 32 may select one of the classification models according to the user's instruction inputted through the GUI, and decide whether the document M has a defect in sheet shape, on the basis of the selected classification model. For example, the controller 31 may cause the display device 21 to display, in the setting screen G1 of the defect detection mode shown in Fig. 4, the keys respectively associated with the criteria for the defect detection in the sheet shape of the document M, so that a touch on one of those keys is detected through the touch panel 23, and the criterion associated with the detected key is adopted.

Likewise, for the defect detection in the information written on the document M also, written information defect decider 33 may create different combinations of the input image data and the classification result data (right answer data), and generate a plurality of classification models, for classifying (deciding) the document M with defect in written information and the document M without defect in written information, according to criteria different from each other. In this case, the written information defect decider 33 may select one of the classification models according to the user's instruction inputted through the GUI, and decide whether the document M has a defect in the written information, on the basis of the selected classification model. For example, the controller 31 may cause the display device 21 to display, in the setting screen G1 of the defect detection mode shown in Fig. 4, the keys respectively associated with the criteria for the defect detection in the written information of the document M, so that a touch on one of those keys is detected through the touch panel 23, and the criterion associated with the detected key is adopted.

In addition, in the case of extracting the four sides of the image of the document M, and detecting that the document M has a defect in sheet shape, when a slope side inclined with respect to the four sides at a corner of the document M is longer than a prespecified threshold, the criterion for deciding whether the document M has a defect in sheet shape can be changed, by modifying the threshold. For example, the controller 31 may cause the display device 21 to display, in the setting screen G1 of the defect detection mode shown in Fig. 4, the keys respectively associated with the plurality of thresholds, so that a touch on one of those keys is detected through the touch panel 23, and the threshold associated with the detected key is adopted.

In the case of the existing image reading apparatuses, unlike in the foregoing embodiment, when the document is dog-eared, the image of the document that has been read also has a missing corner. However, when the information written on the document such as a text is not affected by the dog-ear, the image of the document can be utilized without inconvenience. Accordingly, taking into account the trouble of rectifying the dog-ear of the document and having the rectified document reread, it may be more advantageous to keep from rectifying the dog-ear and having the document reread. Therefore, even though the document is dog-eared, it is desirable to utilize the image of the document as it is, unless the information written on the document is free from a defect.

The aforementioned existing image reading apparatus is configured to identify the folding line at the center of the document, and the density of the pixels in the range affected by the folding line is corrected. However, no reference is made to the case where the information written on the document is free from a defect, despite the document being dog-eared.

Further, in the case of another existing image reading apparatus also, although the document with the sticky note is outputted as a document image without sticky note, no reference is made to the case where the information written on the document is free from a defect, despite the sticky note being attached to the document.

In contrast, the configuration according to the foregoing embodiment facilitates the user to make an advantageous decision with respect to the defect in the document image.

Although the defect detection method has been described on the basis of the image forming apparatus (MFP) in the foregoing embodiment, the defect detection method according to the embodiment of the invention may be applied to, for example, an image reading apparatus or a personal computer, without an image forming mechanism but having a scanning function for reading the image of the document.

Further, the configurations and processings described in the embodiment with reference to Fig. 1 to Fig. 11 are merely examples of the invention, and in no way intended to limit the invention to those configuration.

## Claims

1. An image reading apparatus (10) comprising:
an image reading device (11) that reads an image of a document;
a controller (31) that causes the image reading device to sequentially read a plurality of documents one by one;
a sheet defect decider (32) that decides whether the document that has been read has a defect in sheet shape, on a basis of a document image acquired through a reading operation by the image reading device (11);
a written information defect decider (33) that decides whether information written on the document that has been read has a defect, on a basis of the document image acquired through the reading operation by the image reading device (11); and
a decision device (34) that decides that the document has a defect, when the sheet defect decider (32) decides that the document has a defect in sheet shape, and the written information defect decider (33) also decides that the information written on the document has a defect.

2. The image reading apparatus (10) according to claim 1,
wherein the decision device (34) keeps from deciding that the document has a defect, when the sheet defect decider (32) decides that the document has a defect in sheet shape, but the written information defect decider (33) does not decide that the information written on the document has a defect.

3. The image reading apparatus (10) according to claim 1,
wherein the decision device (34) decides whether the document has a defect, on a basis of the document image, each time the document image corresponding to one sheet of the document is acquired by the image reading device (11), and
the controller (31) causes the image reading device (11) to suspend the reading operation of a next and subsequent documents, at a time point that the decision device (34) has decided that the document has a defect.

4. The image reading apparatus (10) according to claim 1,
wherein the decision device (34) decides whether the document has a defect, on a basis of the document image, each time the document image corresponding to one sheet of the document is acquired by the image reading device (11), and
the controller (31) causes the image reading device (11) to continue with the reading operation of a next and subsequent documents, at a time point that the decision device (34) has decided that the document has a defect, and to stop the reading operation of the image reading device (11), after all the documents have been read.

5. The image reading apparatus (10) according to claim 1,
wherein the sheet defect decider (32) possesses a plurality of criteria different from each other, for decision whether the document has a defect in sheet shape, and decides, when one of the criteria is selected, whether the document has a defect in sheet shape, according to the selected criterion.

6. The image reading apparatus (10) according to claim 1,
wherein the written information defect decider (33) possesses a plurality of criteria different from each other, for decision whether the information written on the document has a defect, and decides, when one of the criteria is selected, whether the information written on the document has a defect, according to the selected criterion.

## Patentansprüche

1. Bildleseeinrichtung (10), umfassend:
eine Bildlesevorrichtung (11), die ein Bild eines Dokuments liest;
eine Steuereinheit (31), welche die Bildlesevorrichtung veranlasst, eine Vielzahl von Dokumenten der Reihe nach einzeln zu lesen;
einen Blattfehler-Entscheider (32), der auf der Grundlage eines durch eine Leseoperation der Bildlesevorrichtung (11) erfassten Dokumentbildes entscheidet, ob das Dokument, das gelesen worden ist, einen Fehler in der Blattform aufweist;
einen Fehlerentscheider für geschriebene Informationen (33), der auf der Grundlage des durch die Leseoperation der Bildlesevorrichtung (11) erfassten Dokumentbildes entscheidet, ob auf dem Dokument, das gelesen worden ist, geschriebene Informationen einen Fehler aufweisen; und
eine Entscheidungsvorrichtung (34), die entscheidet, dass das Dokument einen Fehler aufweist, wenn der Blattfehler-Entscheider (32) entscheidet, dass das Dokument einen Fehler in der Blattform aufweist, und der Fehlerentscheider für geschriebene Informationen (33) ebenfalls entscheidet, dass die auf dem Dokument geschriebene Information einen Fehler aufweist.

2. Bildleseeinrichtung (10) nach Anspruch 1,
wobei die Entscheidungsvorrichtung (34) davon absieht, zu entscheiden, dass das Dokument einen Fehler aufweist, wenn der Blattfehler-Entscheider (32) entscheidet, dass das Dokument einen Fehler in der Blattform aufweist, aber der Fehlerentscheider für geschriebene Informationen (33) nicht entscheidet, dass die auf dem Dokument geschriebene Information einen Fehler aufweist.

3. Bildleseeinrichtung (10) nach Anspruch 1,
wobei die Entscheidungsvorrichtung (34) jedes Mal, wenn das Dokumentbild, das einem Blatt des Dokuments entspricht, durch die Bildlesevorrichtung (11) erfasst wird, auf der Grundlage des Dokumentbildes entscheidet, ob das Dokument einen Fehler aufweist, und
die Steuereinheit (31) zu einem Zeitpunkt, zu dem die Entscheidungsvorrichtung (34) entschieden hat, dass das Dokument einen Fehler aufweist, die Bildlesevorrichtung (11) veranlasst, die Leseoperation für ein nächstes und nachfolgende Dokumente auszusetzen.

4. Bildleseeinrichtung (10) nach Anspruch 1,
wobei die Entscheidungsvorrichtung (34) jedes Mal, wenn das Dokumentbild, das einem Blatt des Dokuments entspricht, durch die Bildlesevorrichtung (11) erfasst wird, auf der Grundlage des Dokumentbildes entscheidet, ob das Dokument einen Fehler aufweist, und
die Steuereinheit (31) zu einem Zeitpunkt, zu dem die Entscheidungsvorrichtung (34) entschieden hat, dass das Dokument einen Fehler aufweist, die Bildlesevorrichtung (11) veranlasst, mit der Leseoperation für ein nächstes und nachfolgende Dokumente fortzufahren und die Leseoperation der Bildlesevorrichtung (11) anzuhalten, nachdem alle Dokumente gelesen worden sind.

5. Bildleseeinrichtung (10) nach Anspruch 1,
wobei der Blattfehler-Entscheider (32) für die Entscheidung, ob das Dokument einen Fehler in der Blattform aufweist, eine Vielzahl von voneinander verschiedenen Kriterien besitzt, und wenn eines der Kriterien ausgewählt wird, gemäß dem ausgewählten Kriterium entscheidet, ob das Dokument einen Fehler in der Blattform aufweist.

6. Bildleseeinrichtung (10) nach Anspruch 1,
wobei der Fehlerentscheider für geschriebene Informationen (33) für die Entscheidung, ob die auf dem Dokument geschriebene Information einen Fehler aufweist, eine Vielzahl von voneinander verschiedenen Kriterien besitzt, und wenn eines der Kriterien ausgewählt wird, gemäß dem ausgewählten Kriterium entscheidet, ob die auf dem Dokument geschriebene Information einen Fehler aufweist.

## Revendications

1. Appareil de lecture d'image (10) comprenant :
un dispositif de lecture d'image (11) qui lit une image d'un document ;
un dispositif de commande (31) qui amène le dispositif de lecture d'image à lire séquentiellement une pluralité de documents un par un ;
un module de décision de défaut de feuille (32) qui décide si le document qui a été lu présente un défaut de forme de feuille, sur une base d'une image du document acquise par l'intermédiaire d'une opération de lecture au moyen du dispositif de lecture d'image (11) ;
un module de décision de défaut d'informations écrites (33) qui décide si des informations écrites sur le document qui a été lu présentent un défaut, sur une base de l'image du document acquise par l'intermédiaire de l'opération de lecture au moyen du dispositif de lecture d'image (11) ; et
un dispositif de décision (34) qui décide que le document présente un défaut, lorsque le module de décision de défaut de feuille (32) décide que le document présente un défaut de forme de feuille, et lorsque le module de décision de défaut d'informations écrites (33) décide également que les informations écrites sur le document présentent un défaut.

2. Appareil de lecture d'image (10) selon la revendication 1,
dans lequel le dispositif de décision (34) s'abstient de décider que le document présente un défaut, lorsque le module de décision de défaut de feuille (32) décide que le document présente un défaut de forme de feuille, mais que le module de décision de défaut d'informations écrites (33) ne décide pas que les informations écrites sur le document présentent un défaut.

3. Appareil de lecture d'image (10) selon la revendication 1,
dans lequel le dispositif de décision (34) décide si le document présente un défaut, sur une base de l'image du document, chaque fois que l'image du document correspondant à une feuille du document est acquise par le dispositif de lecture d'image (11), et
le dispositif de commande (31) amène le dispositif de lecture d'image (11) à suspendre l'opération de lecture d'un document suivant et de documents ultérieurs, lorsque le dispositif de décision (34) a décidé que le document présente un défaut.

4. Appareil de lecture d'image (10) selon la revendication 1,
dans lequel le dispositif de décision (34) décide si le document présente un défaut, sur une base de l'image du document, chaque fois que l'image du document correspondant à une feuille du document est acquise par le dispositif de lecture d'image (11), et
le dispositif de commande (31) amène le dispositif de lecture d'image (11) à poursuivre l'opération de lecture d'un document suivant et de documents ultérieurs, lorsque le dispositif de décision (34) a décidé que le document présente un défaut, et à arrêter l'opération de lecture du dispositif de lecture d'image (11), après que tous les documents ont été lus.

5. Appareil de lecture d'image (10) selon la revendication 1,
dans lequel le module de décision de défaut de feuille (32) dispose d'une pluralité de critères différents, permettant de décider si le document présente un défaut de forme de feuille, et décide, lorsqu'un des critères est sélectionné, si le document présente un défaut de forme de feuille, en fonction du critère sélectionné.

6. Appareil de lecture d'image (10) selon la revendication 1,
dans lequel le module de décision de défaut d'informations écrites (33) dispose d'une pluralité de critères différents, permettant de décider si les informations écrites sur le document présentent un défaut, et décide, lorsqu'un des critères est sélectionné, si les informations écrites sur le document présentent un défaut, en fonction du critère sélectionné.
